# FASCICULE DE BREVET EUROPEEN

(11) **EP 3 172 632 B1**
(45) Date de publication et mention de la délivrance du brevet: **23.01.2019**
(21) Numéro de dépôt: 15762728.2
(22) Date de dépôt: 23.07.2015
(51) Int. Cl.: G05B 23/02

(54) **PROCÉDÉ DE DÉTECTION D'ANOMALIES DANS UN RÉSEAU DE DISTRIBUTION, EN PARTICULIER DISTRIBUTION D'EAU**
VERFAHREN ZUR ERKENNUNG VON ANOMALIEN IN EINEM VERTEILUNGSNETZWERK, INSBESONDERE EIN WASSERVERTEILUNGSNETZ
METHOD FOR DETECTING ANOMALIES IN A DISTRIBUTION NETWORK, IN PARTICULAR A WATER DISTRIBUTION NETWORK

(30) Priorité: 25.07.2014 FR 1457222
(43) Date de publication de la demande: 31.05.2017
(73) Titulaire: SUEZ Groupe, 92040 Paris la Défense Cedex (FR)
(72) Inventeur: JARRIGE, Pierre-Antoine, F-78360 Montesson (FR); GANCEL, Guillaume, F-33370 Yvrac (FR); CAMPAN, Francis, F-92160 Antony (FR)
(74) Mandataire: IPAZ
(86) Numéro de dépôt international: PCT/IB2015/055581
(87) Numéro de publication internationale: WO 2016/012971

(56) Documents cités:
- FR-A1- 2 957 097
- US-A1- 2003 208 287
- US-A1- 2014 107 964

## Description

La présente invention concerne un procédé de détection d'anomalies dans un système d'approvisionnement en fluide, en particulier un réseau de distribution de fluides newtoniens, encore plus particulièrement pour la distribution d'eau, mais aussi par exemple dans les réseaux urbains de chauffage et/ou de climatisation.

La performance opérationnelle est au coeur de la gestion de tels réseaux. Le niveau de performance peut être sensiblement amélioré grâce à des outils de détection et localisation d'anomalies hydrauliques, par exemple sur les réseaux de transport et de distribution d'eau potable.

Dans de tels réseaux, différents types d'incidents peuvent survenir et avoir des conséquences graves pour l'exploitant. Il peut s'agir de fuites, d'interruption de fourniture aux consommateurs, défauts de fonctionnement d'un composant, erreur de manipulation lors d'une intervention ou suite à une intervention, malveillance, comportement anormal ou dysfonctionnement chez un consommateur.

Sur des réseaux très étendus et partiellement inaccessibles (enterrés) la surveillance directe est peu efficace ou souvent impossible. La surveillance par des instruments de mesure n'est pas non plus suffisante, car une anomalie locale peut avoir des effets sur une zone étendue du réseau ou même sur le réseau tout entier, ce qui complique le diagnostic.

On connaît des méthodes de détection basées sur des techniques statistiques. Elles ne permettent ni de caractériser ni de localiser l'anomalie.

D'autres méthodes de détection connues sont basées sur des modèles hydrauliques utilisant des algorithmes évolutionnaires (algorithmes génétiques) pour détecter et/ou localiser des anomalies. Ces méthodes évolutionnaires sont très gourmandes en ressources de calcul, ce qui les rend difficilement applicables à grande échelle. La demande de brevet FR 2 957 097 A1 en donne un exemple.

Le but de la présente invention est de proposer un procédé efficace pour détecter et/ou localiser et/ou caractériser et/ou quantifier une anomalie dans un réseau de distribution pouvant le cas échéant être vaste, comme l'est un réseau de distribution d'eau potable.

Suivant l'invention, le procédé de détection d'anomalies dans un réseau de distribution, comprend :
- établissement pour le réseau d'un modèle direct comprenant les éléments suivants :
   ∘ des données structurelles du réseau,
   ∘ des données opérationnelles relatives à des paramètres choisis comme paramètres d'entrée primaires décrivant un scénario opérationnel,
   ∘ des lois reliant lesdites données structurelles, les paramètres d'entrée primaires et des paramètres de sortie primaires (simuler le modèle);
- exécution du modèle direct pour déterminer des valeurs théoriques des paramètres de sortie primaires (résoudre le problème inverse);
- obtention de mesures des paramètres de sortie primaires ;
- comparaison des valeurs théoriques et des mesures ;
- dans des cas où la comparaison révèle au moins un paramètre de sortie primaire anormal du fait d'un écart important entre valeur théorique et mesure, établissement d'un modèle inverse qui est dérivé du modèle direct en introduisant l'au moins un paramètre de sortie primaire anormal comme un paramètre d'entrée secondaire du modèle inverse, le modèle inverse comportant de plus au moins un paramètre de sortie secondaire en plus des paramètres de sortie primaires conservés ;
- exécution du modèle inverse.

De préférence, le réseau de distribution est un réseau de distribution de fluides.

L'établissement du modèle inverse peut comprendre une minimisation d'une fonction d'écart entre mesure et simulation au point de mesure, par rapport à un ensemble de paramètres configurable.

Le paramètre d'entrée secondaire peut prendre comme valeur la valeur de mesure.

L'exécution du modèle inverse est de préférence réalisée par le moteur de simulation hydraulique.

La résolution du problème inverse peut mettre en oeuvre un algorithme numérique de minimisation des écarts entre sorties théoriques et mesurées utilisant également le calcul dans le modèle direct des sensibilités des sorties par rapport aux entrées.

Les données structurelles sont typiquement relatives à la topographie du réseau, à la nature et aux caractéristiques de ses composants, etc.

On appelle « paramètre d'entrée primaire » un paramètre de fonctionnement. Les paramètres de fonctionnement sont typiquement variables dans le temps. Par exemple dans un réseau de distribution d'eau un débit, une pression, etc., dont on utilise la valeur comme donnée d'entrée pour le modèle direct. Cette valeur peut être fournie par un instrument de mesure où être connue d'une autre manière, comme par exemple une statistique de consommation en fonction de la date et de l'heure.. En général les paramètres d'entrée primaires comprennent des paramètres descriptifs des conditions aux limites du réseau. Par exemple, dans un réseau hydraulique, le débit d'alimentation du réseau et les débits fournis aux consommateurs.

D'une manière générale, l'adjectif « primaire » signifie « relatif au modèle direct » alors que l'adjectif « secondaire » signifiera « relatif au modèle inverse ».

Un « scénario » est un cas de fonctionnement du réseau. Par exemple, dans un réseau hydraulique, le scénario commence avec un certain niveau de remplissage dans un réservoir d'alimentation, et au cours du déroulement du scénario le réservoir est réapprovisionné avec un certain débit, tandis qu'il fournit de l'eau au réseau en fonction des débits prélevés aux points de consommation. Les différents débits évoluent selon des chronogrammes respectifs qui font partie du scénario.

Les lois sont en particulier les lois de la physique applicables. Par exemple, dans un réseau hydraulique, la perte de charge (chute de pression) entre deux points du réseau en fonction de la vitesse d'écoulement et des données structurelles du réseau entre les deux points.

Les « paramètres de sortie primaires » sont des paramètres calculables par exécution du modèle direct pour obtenir leur valeur théorique, et qui sont en même temps mesurables grâce à l'instrumentation du réseau qui fournit une mesure de chacun des paramètres de sortie primaires, ou connus par exemple d'après des statistiques antérieures.

Dans le procédé selon l'invention, on compare la valeur théorique et la valeur réelle des paramètres de sortie primaires et on considère qu'il y a anomalie dans le réseau en cas de discordance entre les valeurs théoriques et mesurées.

Lorsqu'un paramètre de sortie primaire est « anormal » en ce sens qu'il y a entre ses valeurs théoriques et de mesure un écart dépassant une marge d'erreur acceptable, on passe à la résolution (exécution) d'un modèle inverse pour lequel le paramètre de sortie primaire anormal devient un paramètre d'entrée secondaire auquel on donne comme valeur la valeur de mesure. Notamment pour que le modèle inverse ait les degrés de liberté mathématiques nécessaires, on introduit dans le modèle inverse au moins une variable supplémentaire constituée par un nouveau paramètre de sortie secondaire. De préférence on choisit judicieusement ces nouveaux paramètres de sortie secondaires en fonction de l'anomalie de résultat de la comparaison avec les mesures suite à l'exécution du modèle direct.

L'exécution du modèle inverse fournit des résultats qui sont soit directement informatifs, par exemple les nouveaux paramètres de sortie ont une valeur théorique qui permet d'identifier l'anomalie avec une certitude suffisante, soit permettent de converger vers une telle identification par voie itérative comme il sera exposé plus loin.

Ainsi, l'invention exploite finement la cohérence d'ensemble des variables (paramètres de fonctionnement) liées par les « lois », typiquement les équations de comportement du réseau, en particulier hydraulique.

L'au moins un paramètre de sortie secondaire peut être un paramètre ajouté au modèle hydraulique, par rapport au modèle direct.
Par exemple, si l'on soupçonne une fuite en un point du réseau, on peut ajouter un débit de fuite en tant que paramètre de sortie secondaire que l'on cherche à déterminer à l'aide du modèle inverse.

L'au moins un paramètre de sortie secondaire peut aussi correspondre à au moins une donnée supprimée, par rapport au modèle direct. Par exemple si un paramètre d'entrée primaire indique une vanne en position ouverte, mais que l'anomalie révélée par l'écart entre la valeur théorique et la valeur mesurée pour au moins un paramètre d'entrée primaire suggère que cette vanne pourrait être fermée ou partiellement fermée, le paramètre d'entrée primaire en question est choisi comme paramètre de sortie secondaire, et supprimé des paramètres d'entrée pour l'exécution du modèle inverse.

Dans un mode de réalisation préféré, on sélectionne l'au moins un paramètre de sortie secondaire en appliquant au moins un critère révélateur d'une vraisemblance que l'au moins un nouveau paramètre de sortie secondaire soit en cause dans les écarts constatés entre mesures et valeurs théoriques.

En reprenant l'exemple précédent, une valeur de débit mesuré qui est anormale par rapport à la valeur théorique en un point donné du réseau rend par exemple vraisemblable soit la fermeture d'une vanne qui était considérée ouverte, soit l'existence d'une fuite importante, soit un débit à contre-courant anormal en aval (liste non limitative).

Selon une particularité très préférentielle de l'invention, certaines au moins des données opérationnelles, des valeurs théoriques et des mesures comprennent des séries temporelles, c'est-à-dire des séries de valeurs associées chacune à un horaire.

Ainsi, le modèle direct et le modèle inverse sont opérés non seulement de façon statique, mais également de façon dynamique. Ceci permet au modèle de faire des contrôles de cohérence supplémentaires. Par exemple le modèle peut comporter une loi qui relie la variation du niveau d'un réservoir à une somme de débits mesurés en différents points du réseau. En outre, en cas d'anomalie, on obtient non seulement la valeur de l'écart à un instant du fonctionnement, mais une fonction d'écart, donnant l'écart en fonction de tout ou partie des paramètres primaires (exécution du modèle direct) ou secondaires (exécution du modèle secondaire), qu'ils soient d'entrée ou de sortie.

Les mesures, qu'elles soient utilisées pour obtenir certaines données fonctionnelles, ou qu'elles concernent les paramètres de sortie pour obtenir les valeurs de mesure à comparer aux valeurs théoriques, sont alors également obtenues sous forme de séries temporelles. Au lieu de les utiliser à l'état brut, on leur fait de préférence subir un lissage avant de les comparer aux valeurs théoriques. Ainsi les fonctions d'écart sont elles-mêmes automatiquement lissées.
Dans une étape d'initialisation au début de la mise en oeuvre d'un scénario, certaines données fonctionnelles peuvent être difficilement accessibles. C'est typiquement le cas des consommations. Par exemple, s'agissant d'un réseau de distribution d'eau, il est difficile de connaître la consommation heure par heure alimentée par le réseau ou par chaque sous-réseau de ce réseau. On prévoit selon l'invention de remplacer de telles données difficilement accessibles en temps réel par des données connues historiquement ou par expérience. Par exemple, on connaît par des études antérieures la consommation estimée d'un sous-réseau donné à chaque heure du jour et de la nuit, assortie d'information sur l'incertitude de ces valeurs. On peut, au moins au stade de l'initialisation, utiliser ces séries temporelles comme données fonctionnelles.

Certaines données structurelles ou fonctionnelles peuvent être inconnues ou incertaines. Par exemple, dans un réseau de distribution d'eau, l'altitude des points de mesure de pression est importante, puisque chaque mètre d'altitude supplémentaire correspond à une chute de pression de 10 kPa environ, qu'il est nécessaire de prendre en compte pour la justesse des résultats obtenus avec les équations régissant la dynamique des écoulements. Des diamètres de canalisation, des rugosités de canalisation, et autres paramètres influant sur les pertes de charge dans l'écoulement, peuvent être mal connus, notamment dans des installations anciennes.

Notamment pour un tel cas, il peut être judicieux, au cours d'une étape d'initialisation, d'utiliser un modèle inverse pour déterminer certaines données structurelles ou opérationnelles impossibles ou difficiles à obtenir directement, le modèle inverse étant exécuté en tenant pour acquises les valeurs de certains paramètres de sortie primaires, d'après les valeurs connues ou mesurées pour ces paramètres.

Suivant un aspect important de l'invention, on intègre dans l'exécution du modèle direct des calculs de sensibilité de certains au moins des paramètres de sortie primaires, aux variations de certains au moins des autres paramètres, et pour le modèle inverse on choisit comme paramètres de sortie secondaires, des paramètres d'entrée primaires auxquels le paramètre de sortie primaire présentant l'anomalie est plus particulièrement sensible.

La sensibilité peut être obtenue théoriquement comme la dérivée d'un paramètre par rapport à chacun des autres, connaissant les lois qui relient ces paramètres entre eux, ou encore expérimentalement en comparant les variations de la mesure du paramètre de sortie avec les variations des autres paramètres pour toutes les valeurs de la série. La sensibilité peut être différente dans différentes plages de valeurs du paramètre dont la sensibilité est évaluée, et dans différentes plages de valeurs du paramètre par rapport auquel la sensibilité est évaluée. La sensibilité peut dès lors s'exprimer comme une fonction ou comme un tableau de valeurs. La sensibilité peut être positive ou négative, selon que le paramètre de sortie évolue dans le sens, ou respectivement en sens inverse du paramètre par rapport auquel la sensibilité du paramètre de sortie est calculée.

Dans un mode de mise en oeuvre préféré :
- par le modèle direct, on obtient une fonction d'écart de la valeur de l'écart entre valeur théorique et mesure pour le paramètre de sortie primaire anormal en fonction des paramètres de sortie secondaires ;
- on calcule d'après les sensibilités le gradient de la fonction d'écart par rapport aux paramètres ;
- par l'application du modèle inverse, on détermine un ensemble de nouvelles données, modifiant les données initiales, et pour lesquelles le gradient global de la fonction d'écart présente une valeur nulle, indicative de sensibilités positives et négatives qui se neutralisent par rapport aux paramètres ;
- on sélectionne parmi ces paramètres un sous-ensemble formé de ceux pour lesquels la sensibilité est de même signe ;
- on recommence le procédé de façon itérative en restreignant les paramètres de sortie secondaires à ceux faisant partie du sous-ensemble ;
- et ainsi de suite jusqu'à localisation de l'anomalie à un seul paramètre ou un petit nombre de paramètres.

Pour constituer le sous-ensemble, on choisit de préférence le signe de sensibilité correspondant aux paramètres les plus vraisemblablement en cause, d'après leur nature, la valeur réaliste qui résulterait d'une variation dans le sens ramenant la valeur théorique anormale vers la valeur de mesure correspondante.

Typiquement, lorsqu'un seul paramètre de sortie primaire présente une anomalie de la valeur mesurée par rapport à la valeur théorique, on privilégie l'hypothèse d'une erreur de mesure, surtout si le paramètre présentant l'anomalie n'est relié aux limites topographiques du réseau qu'à travers d'autres points de mesure. Dans ce cas, on peut commencer par vérifier l'appareil de mesure avant application du modèle inverse. Mais on peut appliquer le modèle inverse de façon itérative pour conclure à l'erreur de mesure en constatant qu'aucune combinaison de valeurs n'est plausible pour les autres paramètres si la mesure anormale est prise comme hypothèse. Si la mesure provient d'un point de mesure en limite de réseau, l'anomalie a plus de chances de provenir d'un élément exceptionnel au-delà des limites topographiques du réseau. Par exemple un consommateur injecte de l'eau de puits dans le réseau, au lieu de soutirer de l'eau fournie par le réseau. Il faut peut-être alors remettre en cause les données opérationnelles sur les points de consommation.

Dans un mode de mise en oeuvre élaboré, on exécute cycliquement le modèle direct et la comparaison des valeurs théoriques et mesurées, et l'exécution du modèle inverse est automatiquement activée lorsqu'au moins deux paramètres de sortie primaires présentent une anomalie de la valeur mesurée par rapport à la valeur théorique.

De préférence, les éléments de modèle comprennent en outre des indications d'incertitudes sur les données et les paramètres, et au cours de la comparaison ces incertitudes sont prises en compte pour considérer une mesure de paramètre de sortie comme étant conforme ou au contraire anormale.

### DESCRIPTION DE MODES DE RÉALISATION

D'autres particularités et avantages de l'invention ressortiront encore de la description ci-après, relatifs à des exemples non limitatifs relatifs à un réseau de distribution d'eau potable, également appelé « réseau hydraulique ».

### Observation préliminaire

La description qui suit vaut description de toute particularité qu'elle contient, qu'elle soit prise isolément des autres particularités même faisant partie du même paragraphe ou de la même phrase, et vaut description de toute combinaison de telles particularités, dès lors qu'une telle particularité ou combinaison de particularités est distinctive de l'état de la technique et offre un effet technique, que ce soit seule ou en combinaison avec des concepts présentés ci-dessus, et que cette particularité soit exprimée dans les termes même de cette description ou dans des termes plus ou moins généralisés.

### Vocabulaire

On utilisera le vocabulaire suivant :
Série temporelle : séquence finie de données scalaires indexées par le temps, généralement espacées d'une durée constante.
Modèle hydraulique : sans autre précision, désigne le modèle hydraulique d'un réseau de transport et/ou de distribution d'eau potable : ensemble de données décrivant la topologie (graphe du réseau), la topographie (altitude), les caractéristiques des tronçons définissant leur comportement hydraulique (longueur, diamètre intérieur, matériau et/ou rugosité, coefficient de perte de charge singulière, singularités, etc.), les caractéristiques des équipements définissant leur comportement hydraulique (diamètre, coefficient de perte de charge, valeur de consigne, courbe de pompe, etc.) consommations nominales associées aux noeuds du graphe, ainsi qu'un scénario décrivant les conditions de fonctionnement.
Scénario : Ensemble des données conjoncturelles ou opérationnelles décrivant les conditions aux limites utilisées avec un modèle hydraulique pour simuler le comportement d'un système hydraulique dans des conditions particulières, telles que les niveaux initiaux des réservoirs, les séries temporelles de modulation des consommations par secteur et/ou par type de consommateur, les états des pompes, vannes, consignes d'équipements actifs pilotés et/ou les règles d'asservissement.
Mesure : série temporelle issue d'un système d'acquisition de données. Une mesure est associée à un composant élémentaire particulier du modèle hydraulique (arc ou tronçon pour une mesure de débit, noeud pour une mesure de pression, réservoir pour une mesure de niveau).
Modèle direct : La simulation du modèle hydraulique consiste à résoudre numériquement les équations de l'écoulement stationnaire décrites et paramétrées par le modèle hydraulique, et son évolution dynamique, en utilisant les conditions aux limites décrites dans le scénario. Les résultats sont des débits, vitesses, pertes de charge, états, pressions en tout point du système et à tout instant, ces résultats étant habituellement présentés sous forme de série temporelle ou sous forme de carte.
Modèle inverse : (résolution du problème inverse) consiste à résoudre numériquement les équations de l'écoulement stationnaire et leur évolution dans le temps. Elles sont décrites et paramétrées par le modèle hydraulique et un scénario, par rapport à un ou plusieurs paramètres du modèle ou du scénario, en utilisant les mesures de certains débits (ou vitesse), et/ou pressions et/ou niveaux de réservoir.
Données de télé-relève : série d'index de consommation pour un compteur, mesurés à une périodicité de 1 à 24 heures, et télé transmise en général au moins une fois par jour.
Caractéristique : valeur scalaire ou série temporelle contenant une information significative pour le processus étudié.

### Généralités

Le mode de mise en oeuvre du procédé selon l'invention utilise conjointement des données opérationnelles issues d'un système de télésurveillance, permettant la construction d'un scénario, un modèle hydraulique du système du réseau hydraulique, et un système d'analyse des résultats de l'exécution du modèle.

Le programme de modélisation hydraulique intègre un calcul explicite des sensibilités des résultats (mesures) par rapport aux données d'entrée (consommations aux noeuds et résistances hydrauliques aux arcs), permettant le calcul du gradient de l'erreur de simulation par rapport aux paramètres, puis la résolution du problème inverse.

L'utilisation du modèle inverse permet aussi de pallier l'absence de certaines mesures nécessaires à la construction d'un scénario.

L'utilisation du modèle direct permet de détecter des anomalies de comportement du système.

L'utilisation du modèle inverse permet de localiser, dans l'espace et éventuellement dans le temps, l'origine possible de l'anomalie.
L'utilisation optionnelle de données de télé relève permet d'actualiser la répartition spatiale des consommations décrites dans le modèle hydraulique.

### Description détaillée

Les éléments qui sont fournis en entrée pour l'exécution du modèle, la comparaison avec les mesures des paramètres de sortie primaires, et le cas échéant l'exécution du modèle inverse comprennent :
- les données structurelles du réseau, qui peuvent comprendre des consignes et des données d'état des équipements ;
- les paramètres sélectionnés pour constituer les paramètres d'entrée primaires, ainsi que les séries temporelles de leurs valeurs scalaires, obtenues par mesure ou par des données de télé-relève disponibles pour tout ou partie des abonnés, ou encore par des statistiques existantes ;
- les paramètres sélectionnés pour constituer les paramètres de sortie primaires ainsi que les séries temporelles des mesures de ces paramètres ;
- des informations sur la précision et les incertitudes des mesures et des paramètres, leurs pondérations relatives, l'activation des paramètres sélectionnés pour être des paramètres d'entrée secondaires et des paramètres de sortie secondaires lors de la résolution du problème inverse.

### Opérations élémentaires

### - Construction du scénario à partir des mesures et des séries d'états

Cette opération consiste à transcrire les mesures dans une forme utilisable par le logiciel de modélisation hydraulique. Par exemple, la somme algébrique des séries temporelles de débits d'entrée/sortie d'un secteur hydraulique est convertie en série de modulation des consommations nominales du secteur.

### - Résolution du problème direct, calcul des caractéristiques

Cette opération consiste à lancer le moteur de simulation hydraulique, avec comme données d'entrée le modèle hydraulique du système et le scénario créé par l'opération précédente. Les sorties exploitées sont les séries temporelles simulées (valeurs théoriques des paramètres de sortie primaires) comparables à des mesures disponibles pour ces paramètres.

### - Calcul des caractéristiques

Pour chaque point de mesure (paramètre de sortie primaire), on calcule la caractéristique sur la base de la série des résidus, définie comme la différence entre valeur simulée (valeur théorique) et valeur mesurée (lissée ou non), calculée au pas d'acquisition de la mesure. La caractéristique indique s'il y a ou non anomalie.

### - Résolution du problème inverse (cas général)

La résolution du problème inverse est une opération itérative qui consiste à minimiser à l'aide d'un algorithme d'optimisation, une fonction d'écart entre mesure et simulation (valeur théorique) au point de mesure (algorithme opérant par la méthode de la somme des carrés ou la méthode des valeurs absolues des séries de résidus), par rapport à un ensemble de paramètres configurable. Dans la fonction d'écart, chaque point de chaque série est pondéré par un coefficient, calculé à partir de l'incertitude a priori et de la variance empirique locale des mesures.

Le calcul se fait en utilisant des mesures horodatées dans une fenêtre temporelle prédéterminée (par exemple, de 4 à 24 heures).

Chaque itération du problème de minimisation nécessite le calcul de la fonction d'écart en s'appuyant sur le calcul du problème direct. La méthode d'optimisation utilisée fait appel au calcul du gradient de la fonction d'écart par rapport aux paramètres. La valeur de ce gradient est calculée explicitement à partir des sensibilités (dérivées) des mesures par rapport aux paramètres du modèle hydraulique, qui est exécuté explicitement de manière imbriquée avec la résolution du problème direct.

L'un des aspects de l'innovation est d'une part le calcul explicite des sensibilités en même temps que la résolution du problème direct, et leur utilisation pour calculer le gradient ; d'autre part la possibilité de choisir par rapport à quels paramètres le problème inverse est résolu, par exemple :
- Données structurelles (caractéristiques hydrauliques des tronçons et équipements telles que la rugosité ou les coefficients de pertes de charge singulières (PCS))
- Côte (altitude) des capteurs de pression et/ou de niveau
- Répartition spatiale des consommations
- Modulation temporelle d'un ou plusieurs types de consommation de répartition spatiale prédéfinie.

Un autre élément important de l'innovation réside dans l'utilisation des sensibilités pour localiser l'anomalie, lorsque le paramètre identifié est associé à plusieurs composants du modèle. Dans ce cas, lorsque la solution est obtenue, les sensibilités prennent des valeurs positives pour certains composants, négatives pour d'autres, car le gradient d'ensemble prend une valeur nulle à l'optimum. Il suffit alors de répéter la méthode en résolvant par rapport à l'un des deux sous-ensembles de composants dont le gradient est de même signe pour déterminer la localisation de l'anomalie. La séquence ainsi formée de sous-ensembles emboîtés de composants localise l'anomalie de plus en plus précisément.

La précision de la localisation est d'autant plus importante que la densité de mesures est grande, et leur place judicieuse pour la détermination du type de paramètre sélectionné.

### - Problème inverse appliqué à la reconstitution d'une mesure essentielle au cours d'une étape d'initialisation

Lorsqu'une mesure essentielle à la constitution d'un scénario (par exemple un débit d'entrée ou de sortie d'un secteur) est indisponible, la résolution du modèle inverse permet de reconstituer cette mesure manquante, dès lors que certaines conditions d'observabilité sont réunies, en l'occurrence que d'autres mesures existent dont les valeurs sont en relation avec la mesure manquante (par exemple des mesures de niveau de réservoir et/ou de pression).
Un scénario initial est alors constitué en utilisant une série prédéterminée, et le problème inverse résolu par rapport au paramètre constitué par la série manquante.

### - Exécution du modèle inverse appliquée à la détection d'anomalies

Appliquée à l'identification de données structurelles telles que rugosités ou PCS (perte de charge singulière), la résolution du problème inverse (exécution du modèle inverse) permet de caler le modèle hydraulique, de repérer des anomalies de résistance hydraulique telles que des erreurs de saisie de diamètre ou de longueur de conduites, de localiser des vannes fermées oubliées après une intervention.

Appliquée à l'identification de paramètres structurels tels que les altitudes des capteurs ou les consignes d'équipements, la résolution du problème inverse permet de diagnostiquer des pertes de représentativité du modèle hydraulique après une intervention qui a entraîné la modification de l'un des paramètres du réseau.

Appliquée à l'identification de la répartition spatiale des consommations ou la série des coefficients de modulation d'un ou plusieurs types de consommateurs, la résolution du problème inverse permet de localiser les anomalies de consommation. L'écart de chaque paramètre entre ses valeurs théoriques et de mesure constitue un indicateur quantitatif ou une caractéristique utilisable pour la détection d'anomalie.

### - Interprétation des caractéristiques et anomalies

Indicateurs de conformité : pour chaque caractéristique, on calcule un ou plusieurs indicateurs quantitatifs : critère de Nash, « Index of Agreement », taux de dépassement d'un seuil d'erreur.

Anomalies : pour chaque mesure on calcule un indicateur qualitatif (bonne / assez bonne / médiocre / mauvaise) à partir de la position de ses indicateurs de conformité par rapport à des seuils fixés opérationnellement. Les valeurs classées « médiocre » ou « mauvaise » sont identifiées comme anomalies.
Une anomalie isolée sur un secteur est classée « anomalie de mesure » ; l'observation de plusieurs anomalies sur un secteur déclenche une « anomalie réseau ».

### Avantages

L'ensemble constitué par les composants exposés plus haut peut être connecté au système d'information technique de l'opérateur d'un système d'approvisionnement d'eau potable. L'ensemble est construit de telle manière qu'il peut être activé régulièrement, à une fréquence comprise entre la fréquence d'acquisition des données mesurées, et une fois par jour. Dans ces conditions la détection et la caractérisation de l'anomalie sont beaucoup plus rapides qu'avec les méthodes habituellement utilisées et l'efficacité opérationnelle en est considérablement améliorée.

Dans la phase de mise en place d'un modèle hydraulique pour un réseau, l'invention permet de réduire fortement le temps de calage du modèle.

### Premier exemple de réalisation

L'invention est configurée pour modéliser un secteur hydraulique alimenté par gravité par deux réservoirs de tête A et B.

Le modèle hydraulique est constitué d'un fichier au format PICCOLO/GANESSA_SIM.

Le générateur de scénario utilisé est GANESSA_GS.

Le moteur de simulation hydraulique incorporant la résolution de problème (exécution de modèle) direct ou inverse est GANESSA_SIM.
Les éléments alimentant le modèle sont le débit d'entrée de chaque réservoir, le niveau de chaque réservoir, les débits de sortie de chaque réservoir et la pression en un point éloigné, à la fréquence d'une fois par jour. Le débitmètre de sortie du réservoir A présente une anomalie consistant à sous-compter d'environ 10%.

La modélisation hydraulique directe sur 24 heures produit, entre autres, le cumul de la somme algébrique des débits d'entrée et de sortie des réservoirs. La caractéristique « niveau calculé moins niveau mesuré » renseigne sur la justesse des mesures de débit, un écart positif en fin de période indiquant un sous-comptage des débits de sortie, ou un sur comptage des débits d'entrée. L'indicateur calculé à partir de cette caractéristique met en évidence une anomalie ; le signe de la caractéristique pour chacune des mesures de débit de sortie indique le sens de l'anomalie.

Le modèle inverse configuré avec comme paramètres de sortie secondaires, une consommation supplémentaire fixe au point de sortie de chaque réservoir et une série temporelle de coefficients, calcule l'ajustement des deux séries d'intensité pour chaque point de sortie de réservoir. La série associée au point de sortie du réservoir A présente un profil proportionnel au débit de sortie de A, correspondant à une consommation de l'ordre de 10%, tandis que la série associée à B présente des intensités négligeables.

### Second exemple

L'invention est configurée pour modéliser un secteur hydraulique alimenté par une conduite maîtresse en deux points A et B.
Le modèle hydraulique est constitué d'un fichier au format EPANET.
Le générateur de scénario utilisé est GANESSA_GS.
Le moteur de simulation hydraulique incorporant la résolution du problème inverse est GANESSA_SIM.
Les mesures sont les débits et pressions d'entrée (points A et B), et les mesures de pression obtenues à six points additionnels répartis sur le réseau de distribution.

Dans un premier temps l'invention a été utilisée hors ligne pour ajuster le calage hydraulique du modèle : le modèle inverse a permis d'identifier l'altitude précise des points de mesure de pression, la résistance hydraulique des deux vannes d'entrée, et la rugosité moyenne des 4 principales classes de matériaux dont sont constituées les conduites du secteur.

Dans un second temps l'invention est mise en oeuvre à une fréquence quotidienne. Une faible consommation additionnelle (par exemple 1 l/s) est répartie sur l'ensemble des noeuds du modèle, par exemple au prorata des longueurs de conduites qui leur sont raccordées, et attribuée à un code consommateur particulier (par exemple 'LEAK'), et une série temporelle est associée à ce code 'LEAK', initialisée avec des valeurs nulles ou unitaires. Le problème inverse est alors résolu par rapport aux coefficients de la série temporelle des coefficients de 'LEAK'. La caractéristique correspondante est alors analysée : si la consommation correspondante est inférieure à un seuil prédéterminé, alors la situation est considérée comme normale. Dans le cas contraire, une anomalie de consommation est présumée. L'invention est alors à nouveau mise en oeuvre après avoir réalloué la consommation additionnelle aux seuls noeuds pour lesquels la sensibilité calculée à l'étape précédente est négative, et ce à plusieurs reprises, jusqu'à ce que le nombre de noeuds restant soit inférieur à un seuil prédéterminé. Les derniers ensembles de noeuds correspondants sont alors reportés comme localisation de l'anomalie, et la valeur moyenne de la consommation additionnelle (associée à 'LEAK') comme son intensité.

Bien entendu l'invention n'est pas limitée aux exemples décrits.

## Revendications

1. Procédé de détection d'anomalies dans un réseau de distribution de fluides, comprenant les étapes suivantes :
- établir pour le réseau de distribution un modèle direct comprenant les éléments suivants :
∘ des données structurelles du réseau de distribution relatives à la topographie dudit réseau de distribution et comprenant des consignes ou des données d'états d'équipement dudit réseau de distribution,
∘ des données opérationnelles relatives à des paramètres choisis comme paramètres d'entrée primaires décrivant un scénario opérationnel,
∘ des lois reliant lesdites données structurelles, les paramètres d'entrée primaires et des paramètres de sortie primaires ;
- exécuter le modèle direct par un moteur de simulation hydraulique pour déterminer des valeurs théoriques des paramètres de sortie primaires ;
- avant ou après tout ou partie de ce qui précède, obtenir des mesures issues de systèmes d'acquisition de données des paramètres de sortie primaires ;
- comparer les valeurs théoriques avec les mesures ;
- dans des cas où la comparaison révèle au moins un paramètre de sortie primaire anormal du fait d'un écart important entre valeur théorique et mesure, établir un modèle inverse comprenant une minimisation d'une fonction d'écart entre mesure et simulation au point de mesure, par rapport à un ensemble de paramètres configurable, le modèle inverse étant dérivé du modèle direct en introduisant l'au moins un paramètre de sortie primaire anormal comme un paramètre d'entrée secondaire du modèle inverse, le paramètre d'entrée secondaire prenant comme valeur la valeur de mesure, et le modèle inverse comportant de plus au moins un paramètre de sortie secondaire en plus de ceux des paramètres de sortie primaires qui sont conservés ;
- exécuter le modèle inverse par le moteur de simulation hydraulique ;
- localiser une anomalie du réseau de distribution à partir de l'exécution du modèle inverse.

2. Procédé selon la revendication 1, **caractérisé en ce que** au moins un paramètre de sortie secondaire est un paramètre ajouté au modèle, par rapport au modèle direct.

3. Procédé selon la revendication 1 ou 2, **caractérisé en ce que** au moins un paramètre de sortie secondaire correspond à au moins une donnée supprimée, par rapport au modèle direct.

4. Procédé selon l'une des revendications 1 à 3, **caractérisé en ce qu'**on sélectionne au moins un paramètre de sortie secondaire en appliquant des critères indiquant une vraisemblance que au moins un nouveau paramètre de sortie secondaire soit en cause dans les écarts constatés entre mesures et valeurs théoriques.

5. Procédé selon l'une des revendications 1 à 4, **caractérisé en ce que** certaines au moins des données opérationnelles, des valeurs théoriques et des mesures comprennent des séries temporelles c'est-à-dire chacune une série de valeurs associées chacune à un horaire.

6. Procédé selon la revendication 5, **caractérisé en ce que** les séries temporelles formées de valeurs obtenues à partir de mesures sont lissées suivant une durée caractéristique configurable.

7. Procédé selon l'une des revendications 1 à 6, **caractérisé en ce que** dans une étape d'initialisation on utilise un modèle inverse pour déterminer certaines données structurelles ou opérationnelles impossibles ou difficiles à obtenir directement, le modèle inverse étant exécuté en tenant pour acquises les valeurs de certains paramètres de sortie primaires.

8. Procédé selon l'une des revendications 1 à 7, **caractérisé en ce qu'**on intègre dans l'exécution du modèle direct des calculs de sensibilité de certains au moins des paramètres de sortie primaires aux variations de certains au moins des autres paramètres, et **en ce que** pour le modèle inverse on choisit comme paramètres de sortie secondaires, des paramètres d'entrée primaires auxquels le paramètre de sortie primaire anormal est plus particulièrement sensible.

9. Procédé selon la revendication 8, **caractérisé en ce que** :
- par le modèle direct, on obtient une fonction d'écart de la valeur de l'écart entre valeur théorique et mesure pour le paramètre de sortie primaire anormal, en fonction des paramètres de sortie secondaires ;
- -on calcule d'après les sensibilités le gradient de la fonction d'écart par rapport aux paramètres ;
- par l'application du modèle inverse on détermine un ensemble de nouvelles données, modifiant les données initiales, et pour lesquels le gradient global de la fonction d'écart présente une valeur nulle, indicative de sensibilités positives et négatives qui se neutralisent ;
- on sélectionne parmi les paramètres par rapport auxquels les sensibilités sont calculées, un sous-ensemble formé de ceux pour lesquels la sensibilité est de même signe ;
- on recommence le procédé de façon itérative en restreignant les paramètres de sortie secondaires à ceux faisant partie du sous-ensemble ;
- et ainsi de suite jusqu'à localisation de l'anomalie à un seul paramètre ou un petit nombre de paramètres.

10. Procédé selon l'une des revendications 1 à 6, **caractérisé en ce que** lorsqu'un seul paramètre de sortie primaire présente une anomalie de la valeur mesurée par rapport à la valeur théorique, on privilégie l'hypothèse d'une erreur de mesure.

11. Procédé selon l'une des revendications 1 à 10, **caractérisé en ce qu'**on exécute cycliquement le modèle direct et la comparaison des valeurs théoriques et mesurées, et **en ce que** l'exécution du modèle inverse est automatiquement activée lorsqu'au mois deux paramètres de sortie primaires présentent une anomalie de la valeur mesurée par rapport à la valeur théorique

12. Procédé selon l'une des revendications 1 à 11, **caractérisé en ce que** les éléments de modèle comprennent en outre des indications d'incertitudes sur les données et les paramètres, et au cours de la comparaison ces incertitudes sont prises en compte pour considérer une mesure de paramètre de sortie comme étant conforme ou au contraire anormale.

## Patentansprüche

1. Verfahren zur Erkennung von Anomalien in einem Medien-Verteilungsnetzwerk, welches folgende Schritte umfasst:
- Erstellung eines direkten Modells für das Verteilungsnetzwerk, welches Folgendes umfasst:
- Strukturdaten des Verteilungsnetzwerks über die Topographie des Verteilungsnetzwerks und welche Anweisungen oder Daten über Zustände der Ausrüstung des Verteilungsnetzwerks umfassen,
- Betriebsdaten über Parameter, die als primäre Eingabeparameter ausgewählt sind, welche ein Betriebsszenario beschreiben,
- Gesetze, die die Strukturdaten, die primären Eingabeparameter und primäre Ausgabeparameter miteinander verknüpfen;
- Durchführung des direkten Modells mittels eines hydraulischen Simulationsmotors zur Bestimmung von theoretischen Werten der primären Ausgabeparameter;
- vor oder nach den gesamten oder Teilen der obigen Ausführungen, Erhaltung von Messwerten aus den Datenerfassungssystemen der primären Ausgabeparameter;
- Vergleich der theoretischen Werte mit den Messwerten;
- in Fällen, in denen der Vergleich wenigstens einen anormalen primären Ausgabeparameter aufgrund einer großen Abweichung zwischen dem theoretischen Wert und dem Messwert anzeigt, Erstellung eines inversen Modells, welches eine Minimierung einer Abweichungsfunktion zwischen dem Messwert und der Simulation am Messpunkt umfasst, bezogen auf einen konfigurierbaren Parametersatz, wobei das inverse Modell vom direkten Modell abgeleitet ist durch Einführung des wenigstens einen anormalen primären Ausgabeparameters als einen sekundären Eingabeparameter des inversen Modells, wobei der sekundäre Eingabeparameter den Messwert als Wert annimmt, und das inverse Modell ferner wenigstens einen sekundären Ausgabeparameter zusätzlich zu den der primären Ausgabeparameter umfasst, die beibehalten werden;
- Durchführung des inversen Modells mittels des hydraulischen Simulationsmotors;
- Lokalisierung einer Anomalie des Verteilungsnetzwerks auf der Grundlage der Durchführung des inversen Modells.

2. Verfahren gemäss Anspruch 1, **dadurch gekennzeichnet, dass** es sich bei wenigstens einem sekundären Ausgabeparameter, im Vergleich zum direkten Modell, um einen zum Modell hinzugefügten Parameter handelt.

3. Verfahren gemäss Anspruch 1 oder 2, **dadurch gekennzeichnet, dass** es sich bei wenigstens einem sekundären Ausgabeparameter, im Vergleich zum direkten Modell, um wenigstens einen gelöschten Wert handelt.

4. Verfahren gemäss einem der Ansprüche 1 bis 3, **dadurch gekennzeichnet, dass** wenigstens ein sekundärer Ausgabeparameter unter Anwendung von Kriterien ausgewählt wird, die eine Wahrscheinlichkeit anzeigen, dass wenigstens ein neuer sekundärer Ausgabeparameter für die zwischen den Messwerten und den theoretischen Werten festgestellten Abweichungen verantwortlich ist.

5. Verfahren gemäss einem der Ansprüche 1 bis 4, **dadurch gekennzeichnet, dass** wenigstens einige der Betriebsdaten, der theoretischen Werte und der Messwerte Zeitreihen umfassen, das heißt, dass jedes eine Reihe von Werten umfasst, die jeweils einer Uhrzeit zugeordnet sind.

6. Verfahren gemäss Anspruch 5, **dadurch gekennzeichnet, dass** die Zeitreihen, die auf Werten beruhen, welche aus Messungen gewonnen werden, entsprechend einer konfigurierbaren, charakteristischen Zeitdauer geglättet werden.

7. Verfahren gemäss einem der Ansprüche 1 bis 6, **dadurch gekennzeichnet, dass** in einem Initialisierungsschritt ein inverses Modell zur Bestimmung gewisser Strukturdaten oder gar nicht oder schwer direkt gewinnbarer Betriebsdaten verwendet wird, wobei das inverse Modell auf der Grundlage der als gegeben angesehenen Werte gewisser primärer Ausgabeparameter durchgeführt wird.

8. Verfahren gemäss einem der Ansprüche 1 bis 7, **dadurch gekennzeichnet, dass** bei der Durchführung des direkten Modells Empfindlichkeitsberechnungen von wenigstens einigen der primären Ausgabeparameter in die Variationen wenigstens einiger der anderen Parameter integriert werden, und dass für das inverse Modell als sekundäre Ausgabeparameter, primäre Eingabeparameter gewählt werden, für die der anormale primäre Ausgabeparameter besonders empfindlich ist.

9. Verfahren gemäss Anspruch 8, **dadurch gekennzeichnet, dass**
- mittels des direkten Modells eine Abweichungsfunktion des Werts der Abweichung zwischen dem theoretischen Wert und dem Messwert für den anormalen primären Ausgabeparameter in Abhängigkeit von den sekundären Ausgabeparametern erhalten wird;
- der Gradient der Abweichungsfunktion entsprechend den Empfindlichkeiten bezogen auf die Parameter berechnet wird;
- mittels Durchführung des inversen Modells ein Satz von neuen, die ursprünglichen Daten modifizierenden Daten bestimmt wird, und für die der globale Gradient der Abweichungsfunktion einen Wert gleich Null aufweist, welcher positive und negative Empfindlichkeiten anzeigt, die sich aufheben;
- unter den Parametern, bezüglich der die Empfindlichkeiten berechnet werden, eine Untergruppe ausgewählt wird, die aus jenen besteht, für die die Empfindlichkeit das gleiche Vorzeichen aufweist;
- das Verfahren auf iterative Weise wiederholt wird, wobei die sekundären Ausgabeparameter auf jene beschränkt werden, die der Untergruppe angehören;
- und so fort, bis zur Lokalisierung der Anomalie bei einem einzigen Parameter oder bei einer geringen Anzahl von Parametern.

10. Verfahren gemäss einem der Ansprüche 1 bis 6, **dadurch gekennzeichnet, dass** falls nur ein einziger primärer Ausgabeparameter eine Anomalie des Messwerts bezogen auf den theoretischen Wert aufweist, die Hypothese bevorzugt wird, dass es sich um einen Messfehler handelt.

11. Verfahren gemäss einem der Ansprüche 1 bis 10, **dadurch gekennzeichnet, dass** das direkte Modell und der Vergleich zwischen den theoretischen Werten und den Messwerten zyklisch durchgeführt werden, und dass die Durchführung des inversen Modells automatisch aktiviert wird, wenn wenigstens zwei primäre Ausgabeparameter eine Anomalie des Messwerts bezogen auf den theoretischen Wert aufweisen.

12. Verfahren gemäss einem der Ansprüche 1 bis 11, **dadurch gekennzeichnet, dass** die Elemente des Modells weiterhin Unsicherheitsangaben bezogen auf die Werte und Parameter umfassen, und dass diese Unsicherheiten im Verlauf des Vergleichs berücksichtigt werden, um einen Ausgabeparametermesswert als konform oder im Gegenteil als anormal einzustufen.

## Claims

1. Method for detecting anomalies in a fluid distribution network, comprising the following steps:
- establishing, for the distribution network, a direct model comprising the following elements:
∘ structural data of the distribution network relative to the topography of said distribution network and comprising setpoints or status data of equipment of said distribution network,
∘ operational data relative to parameters chosen as primary input parameters describing an operational scenario,
∘ laws linking said structural data, the primary input parameters and primary output parameters;
- executing the direct model by a hydraulic simulation engine to determine theoretical values of the primary output parameters;
- before or after all or part of the above, obtaining measurements from data acquisition systems of the primary output parameters;
- comparing the theoretical values with the measurements;
- in the case where the comparison reveals at least one primary output parameter that is abnormal because of a significant deviation between theoretical value and measurement, establishing an inverse model comprising a minimization of a function of deviation between measurement and simulation at the measurement point, relative to a configurable set of parameters, the inverse model being derived from the direct model by introducing the at least one abnormal primary output parameter as a secondary input parameter of the inverse model, the secondary input parameter taking the measurement value as value, and the inverse model also comprising at least one secondary output parameter in addition to those of the primary output parameters which are retained;
- executing the inverse model by the hydraulic simulation engine;
- locating an anomaly of the distribution network from the execution of the inverse model.

2. Method according to Claim 1, **characterized in that** at least one secondary output parameter is a parameter added to the model, relative to the direct model.

3. Method according to Claim 1 or 2, **characterized in that** at least one secondary output parameter corresponds to at least one deleted datum, relative to the direct model.

4. Method according to one of Claims 1 to 3, **characterized in that** at least one secondary output parameter is selected by applying criteria indicating a likelihood that at least one new secondary output parameter is implicated in the deviations observed between measurements and theoretical values.

5. Method according to one of Claims 1 to 4, **characterized in that** at least some of the operational data, theoretical values and measurements comprise temporal series, that is to say each a series of values each associated with a schedule.

6. Method according to Claim 5, **characterized in that** the temporal series formed from values obtained from measurements are smoothed following a configurable characteristic duration.

7. Method according to one of Claims 1 to 6, **characterized in that**, in an initialization step, an inverse model is used to determine certain structural or operational data that are impossible or difficult to obtain directly, the inverse model being executed by taking for granted the values of certain primary output parameters.

8. Method according to one of Claims 1 to 7, **characterized in that**, in the execution of the direct model, calculations of sensitivity of at least some of the primary output parameters to the variations of at least some of the other parameters are incorporated, and **in that**, for the inverse model, primary input parameters to which the abnormal primary output parameter is more particularly sensitive are chosen as secondary output parameters.

9. Method according to Claim 8, **characterized in that**:
- by the direct model, a function of deviation of the value of the deviation between theoretical value and measurement for the abnormal primary output parameter is obtained, as a function of the secondary output parameters;
- the gradient of the deviation function relative to the parameters is calculated according to the sensitivities;
- by the application of the inverse model, a set of new data is determined, modifying the initial data, and for which the overall gradient of the deviation function exhibits a zero value, indicative of positive and negative sensitivities which are neutralized;
- from the parameters relative to which the sensitivities are calculated, a subset is selected that is formed from those for which the sensitivity is of the same sign;
- the method is recommenced iteratively by restricting the secondary output parameters to those forming part of the subset;
- and so on until the anomaly is located with a single parameter or a small number of parameters.

10. Method according to one of Claims 1 to 6, **characterized in that** when a single primary output parameter exhibits an anomaly of the measured value relative to the theoretical value, the assumption of a measurement error is favoured.

11. Method according to one of Claims 1 to 10, **characterized in that** the direct model and the comparison of the theoretical and measured values are executed cyclically, and **in that** the execution of the inverse model is automatically activated when at least two primary output parameters exhibit an anomaly of the measured value relative to the theoretical value.

12. Method according to one of Claims 1 to 11, **characterized in that** the model elements further comprise indications of uncertainties on the data and the parameters, and during the comparison these uncertainties are taken into account to consider an output parameter measurement as being conformal or, on the contrary, abnormal.
